# EUROPÄISCHE PATENTSCHRIFT

(11) **EP 0 896 862 B1**
(45) Veröffentlichungstag und Bekanntmachung des Hinweises auf die Patenterteilung: **20.02.2002**
(21) Anmeldenummer: 98113261.6
(22) Anmeldetag: 16.07.1998
(51) Int. Cl.: B25B 23/06, B25B 31/00, F16B 27/00

(54) **Montageanordnung für Aufschiebemuttern**
Assembling arrangement for push-nut
Dispositif de montage pour écrou à emboîtement

(30) Priorität: 12.08.1997 DE 29714439 U
(43) Veröffentlichungstag der Anmeldung: 17.02.1999
(73) Patentinhaber: Hellermann Tyton GmbH, 25436 Tornesch (DE)
(72) Erfinder: Kurmis, Viktor, 25421 Pinneberg (DE)
(74) Vertreter: Glawe, Delfs, Moll & Partner

(56) Entgegenhaltungen:
- DE-A- 1 475 035
- DE-C- 291 873
- GB-A- 386 458
- GB-A- 584 430
- US-A- 1 756 003

## Beschreibung

Es sind Muttern bekannt (EP-B 517 279, EP-B 517 281), deren mit einem Bolzengewinde zusammenwirkende, innere Vorsprünge in einer Axialrichtung nachgiebig sind, so daß sie in Längsrichtung auf einen Gewindebolzen aufgeschoben werden können. Sie werden im folgenden als Aufschiebemuttern bezeichnet. Zur Montage werden bislang einzelne Aufschiebemuttern in ein entsprechendes Werkzeug eingesetzt, mit dem sie auf den Bolzen aufgeschoben werden (DE-A 1 475 035).

Ferner ist es bekannt (DE-C 291873, US-A 1,756,003, GB-A 584,430, GB-A 386,458), eine Reihe von Gewindemuttern in dem Rohr eines Werkzeugs zu magazinieren. Durch eine Feder werden sie zum offenen Ende dieses Rohres gedrängt, wo die letzte, jeweils zu montierende Mutter durch eine Klemme festgehalten wird, die durch Überwindung einer Widerstandsschwelle oder von Hand gelöst werden kann.

Die Erfindung sucht eine Montageanordnung zu schaffen, die die Montagezeiten zu vermindern hilft. Die Lösung liegt in den Merkmalen des Anspruchs 1, vorzugsweise auch denjenigen der Unteransprüche.

Ein Werkzeug zum Montieren von Aufschiebemuttern umfaßt ein am vorderen Ende offenes Magazinrohr zur Aufnahme einer Reihe von Aufschiebemuttern. Die Mutternreihe wird durch eine Feder zum vorderen Ende des Magazinrohrs bedrängt, wo eine Sperre vorgesehen ist, die dafür sorgt, daß die jeweils vorderste montagebereite Aufschiebemutter (und damit auch die übrigen) unter der Kraft der Feder nicht aus dem Magazinrohr entweichen kann. Diese Sperre ist so nachgiebig, daß sie durch die Montagekraft, mit der die vorderste Mutter auf einen Bolzen aufgeschoben wird, überwunden werden kann. Ferner ist am vorderen Ende des Magazinrohrs ein Widerlager vorgesehen, daß die jeweils vorderste Mutter gegenüber den Aufschiebekräften abstützt. Damit dieses Widerlager nicht das Nachrücken einer weiteren Mutter behindert, wenn die vorderste Aufschiebemutter montiert ist, ist das Widerlager quer zur Richtung des Magazinrohrs beweglich.

Vorzugsweise ist das Widerlager durch Federkraft außer Eingriff gedrängt und ist eine Betätigungseinrichtung zum Einschieben des Widerlagers zwischen die von der Sperre gehaltene und die folgende Aufschiebemutter vorgesehen. Diese Betätigungseinrichtung wird jeweils dann betätigt, wenn ein Montagevorgang bevorsteht. Insbesondere kann vorgesehen sein, daß das Widerlager an einem längsseits des Magazinrohrs angeordneten, gemeinsam mit dem Magazinrohr greifbaren Hebel angeordnet ist, der beim Greifen des Werkzeugs in solcher Weise mit erfaßt wird, daß das Widerlager in das Magazinrohr hineinbewegt wird und dabei in die Abstützlage hinter der vordersten Aufschiebemutter gelangt. Dabei kann das Widerlager einen gabeligen Teil aufweisen, der zum Zusammenwirken mit Schlüsselflächen der zu montierenden Aufschiebemutter versehen ist, damit man durch Drehen des Werkzeugs der Mutter einen gegebenenfalls gewünschten Anzug verleihen kann. Es versteht sich, daß in diesem Fall der gabelige Teil des Widerlagers drehfest mit dem übrigen Werkzeug verbunden ist.

Die Einrichtung zum Einschieben des Widerlagers hinter die zu montierende Mutter kann auch in anderer Weise so ausgebildet sein, daß mit dem Greifen des Werkzeugs oder durch das Vorschieben des Werkzeugs beim Montagevorgang eine Relativbewegung stattfindet, die auf das Widerlager übertragen wird, um es in die funktionsbereite Stellung zu bringen.

Stattdessen kann auch vorgesehen sein, daß das Widerlager durch Federkraft in die Abstützposition für die jeweils vorderste Mutter gedängt ist, daß es aber elastisch ausweichen kann, wenn nach der Montage der vordersten Mutter die nächste unter der Kraft der Vorschubfeder nachdrängt. Sobald diese das ausweichende Widerlager passiert hat, schnellt es in die Funktionslage zurück.

Bei der oben als bevorzugt angegebenen Ausführung, bei der das Widerlager an einem längsseits des Magazinrohrs angeordneten Hebel angeordnet ist, ist dieser zweckmäßigerweise an einen das hintere Ende des Magazinrohrs schließenden Formteil angelenkt, wobei der Hebel und der Formteil einstückig aus Kunststoff bestehen und durch ein Biegescharnier verbunden sein können. Das Werkzeug besteht dann nur aus zwei Hauptteilen, nämlich dem Magazinrohr und einem leicht aus Kunststoff herstellbaren Teil, der das Widerlager, den Hebel und den Formteil bildet.

Für die Aufnahme der Aufschiebemuttern ist zweckmäßigerweise eine Vorratsstange vorgesehen, die am vorderen Ende die nachgiebige Sperre trägt und deren hinteres Ende mit dem Magazinrohr oder einem damit verbundenen Teil, insbesondere dem eben erwähnten Formteil, eine Halterung bildet. Die nachgiebige Sperre am vorderen Ende der Stange kann eine einfache Verdikkung sein, wenn die Aufschiebemuttern nachgiebige innere Gewindeerhöhungen tragen, die gegen einen gewissen Widerstand, der größer ist als die Kraft der Vorschubfeder, über die Verdickung hinweggleiten können. Die Halterung für das hintere Ende der Stange soll so ausgeführt sein, daß sie sich mehr oder weniger frei gegen die Kraft der Vorschubfeder um eine gewisse Strecke nach hinten bewegen kann. Bei der Montage der jeweils vordersten Mutter auf einen Bolzen dringt dieser in diese Mutter ein und gegebenenfalls auch ein gewisses Stück darüber hinaus, wobei er das vordere Ende der Vorratsstange nach hinten verdrängt. Dem trägt die Bewegungsmöglichkeit der Vorschubstange nach hinten Rechnung. Die Bewegungsstrecke der Vorschubstange nach vorne wird durch einen Anschlag begrenzt, der so angeordnet ist, daß die an der Sperre am vorderen Ende der Stange gehaltene Mutter sich bei Erreichen des Anschlags gerade in der Montagestellung befindet.

Die Halterung für die Vorratsstange in dem Magazinrohr wird zweckmäßigerweise dadurch gebildet, daß der Formteil, der das Magazinrohr hinten abschließt, eine Längsbohrung mit in diese hineinragenden Federzungen enthält, die mit einer Verdickung an der Stange die Halterung und gegebenenfalls auch den Anschlag bilden.

Nach einem Merkmal der Erfindung könnten mehrere Vorratsstangen mit den darauf befindlichen Aufschiebemuttern streifenförmig und lösbar miteinander verbunden sein. Beispielsweise können die verdickten vorderen Enden der Stangen in einen Haltestreifen oder eine Halteplatte eingeklippst sein, aus dem/der sie sich zum Einfügen in das Werkzeug leicht lösen lassen. Sie können mit dem Streifen bzw. der Platte auch einstückig verbunden und abbrechbar sein.

Die nachgiebige Sperre kann auch am Magazinrohr vorgesehen werden. In diesem Fall ist die Vorratsstange nicht erforderlich.

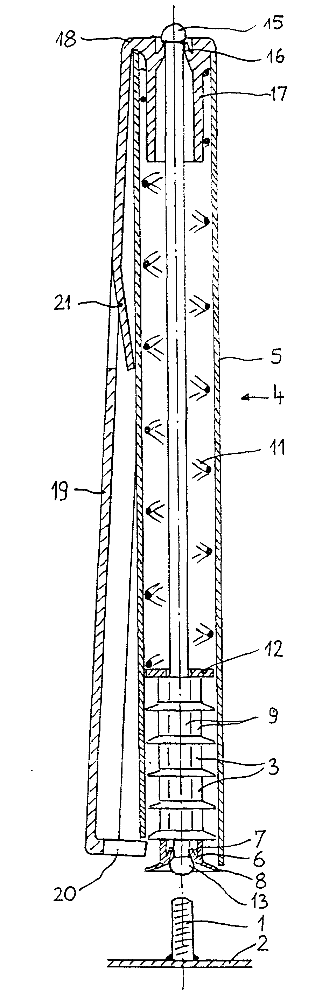

Die Erfindung wird im folgenden näher unter Bezugnahme auf die Zeichnung erläutert, die in einer Figur einen Längsschnitt durch das Werkzeug veranschaulicht.

Auf den Gewindebolzen 1, der an einen Bauteil 2 angeschweißt ist, ist eine Aufschiebemutter zu montieren. Mehrere derartige Aufschiebemuttern 3 sind in einem Montagewerkzeug 4 enthalten.

Der Aufbau der Aufschiebemuttern ist erkennbar aus der Schnittdarstellung der montagebereit an vorderster Stelle im Werkzeug 4 befindlichen Aufschiebemutter 6. Innerhalb ihrer Durchlaßöffnung sind mehrere Federzungen 7 über den Umfang verteilt, die dazu bestimmt sind, mit den Gewindegängen des Bolzens 1 haltend zusammenzuwirken. An ihrem in der Zeichnung unten erscheinenden Rand haben die Muttern einen elastischen, konischen Kragen 8, der ihren klapperfreien Sitz auch bei Maßtoleranzen gewährleistet. Außen auf ihrem prismatischen Teil weisen die Muttern 3 Sechskantschlüsselflächen 9 auf.

Zur Aufnahme der Muttern 3 weist das Werkzeug 4 ein Magazinrohr 5 auf. Sie werden darin durch eine Feder 11 nach vorne, d.h. zu der in der Zeichnung unten erscheinenden Montageöffnung des Magazinrohrs 5 gedrückt. Eine Unterlegscheibe 12, die bei vollständiger Entleerung des Magazinrohrs von Muttern 3 mit einer nicht dargestellten kleinen Verengung am Montageende des Magazinrohrs 5 zusammenwirkt, sorgt dafür, daß die Feder nicht aus dem Magazinrohr herausspringen kann. Gehalten werden die im Magazinrohr befindlichen Muttern 3 durch eine Verdickung 13 am vorderen Ende einer Vorratsstange 14. Die Verdickung 13 wirkt mit den Federzungen 7 in der an vorderster Stelle befindlichen Aufschiebemutter 6 so zusammen, daß diese entgegen der Vorschubkraft der Feder 11 festgehalten wird. Dies gilt auch dann, wenn das Magazinrohr vollständig mit Muttern gefüllt ist und die Feder dementsprechend maximal zusammengedrückt ist. Jedoch kann die Verdickung 13 durch eine höhere Kraft unter entsprechender elastischer Verformung der Federzungen 7 durch die Aufschiebemutter 6 hindurchgedrückt werden.

Die Vorratsstange 14 weist auch an ihrem hinteren Ende eine Verdickung 15 auf, die mit Federzungen 16 in einem Formteil 17 aus Kunststoff gehalten ist. Die Federzungen 16 sind schräg von vorn nach hinten gerichtet, so daß die Verdickung 15 in Richtung von vorne nach hinten durchtreten kann. Die Vorratsstange 14 mit den daraufsitzenden Muttern kann daher durch die vordere Montageöffnung in das Magazinrohr 5 eingeschoben werden, bis die hintere Verdickung 15 hinter den Federzungen 16 verrastet ist. Die Verdickung 15 wird durch die Feder 11 gegen die Federzungen 16 gedrückt und bildet gemeinsam mit diesem einen Anschlag, der die Position der Vorratsstange 14 festlegt. Dadurch wird auch die Position der an vorderster Stelle befindlichen Aufschiebemutter 6 bestimmt. Jedoch kann die Vorratsstange 14 mit den darauf befindlichen Muttern zurückgeschoben werden. Dies geschieht, wie weiter unten noch beschrieben wird, im Zusammenhang mit dem Montagevorgang.

Über ein Biegescharnier 18 ist mit dem Formteil 17 ein Hebel 19 verbunden, der im Querschnitt U-förmig ist und daher beträchtliche Steifigkeit aufweist. Er endet vorne in einem Widerlager 20, das im Schnitt quer zur Richtung des Magazinrohrs 5 U-förmig gestaltet ist, wobei der Zwischenraum zwischen seinen Schenkeln der Schlüsselweite der Schlüsselflächen 9 der Muttern 3 bzw. 6 entspricht. Aus dem Rückensteg des Hebels 19 ist eine Federzunge 21 ausgeklinkt, die sich gegen das Magazinrohr 5 legt und den Hebel von dem Magazinrohr wegzudrängen bestrebt ist, so daß das Widerlager 20 - wie in der Figur gezeigt - nicht in Eingriff ist. Das Biegegelenk 18 ist so ausgeführt, daß es eine Federkraft erzeugt, die schwächer als diejenige der Federzunge 21 ist und den Hebel 19 längsseits des Magazinrohrs 5 hält.

Gegen die Kraft der Federzunge 21 kann der Hebel 19 an das Magazinrohr 5 herangedrückt werden. Dies geschieht ohne besonderes Zutun jeweils dann, wenn man das Werkzeug fest in die Hand nimmt. Das Widerlager 20 schiebt sich dann durch eine Seitenöffnung am vorderen Ende des Magazinrohrs in dessen lichten Querschnitt hinein und umfaßt mit seinen Schenkeln den prismatischen Teil der an vorderster Stelle befindlichen Aufschiebemutter 6 hinter deren Kragen 7. Dadurch wird die Mutter 6 nach hinten abgestützt, so daß sie unter der Montagekraft nicht ausweichen kann.

Zur Montage wird das Werkzeug mit der Aufschiebemutter 6 auf den Bolzen 1 gedrückt. Während dieser in die zu montierende Mutter 6 eindringt, schiebt er die Verdickung 13 der Vorratsstange 14 durch die Mutter 6 nach hinten. Dadurch wird sie von der Verdickung 13 frei. Bei diesem Vorgang gleitet die Vorratsstange 14 nach hinten, wobei sich die hintere Verdikkung 15 von den Federzungen 16 entfernt. Falls der Bolzen 1 nach vollständiger Montage über die Mutter 6 nach hinten hinausragt, wird auch der gesamte Mutternvorrat mit der Stange 14 weiter nach hinten gedrückt.

Gewünschtenfalls kann die auf den Bolzen 1 aufgeschobene Mutter 6 durch das Montagewerkzeug auch noch gedreht werden, um auf dem Bolzengewinde stärker angezogen zu werden. Dies wird durch das Zusammenwirken des gabeligen Widerlagers 20 mit den Schlüsselflächen 9 ermöglicht.

Wenn die Montage beendet ist, wird das Werkzeug 4 zurückgezogen und der Hebel 19 wird wieder gelöst, so daß das Widerlager 20 wieder in die dargestellte Ruhelage zurückweicht. Unter dem Einfluß der Feder 11 gleitet der Mutternvorrat mit der Vorratsstange 14 nach vorne, so daß nun die nächste Mutter in montagebereiter Stellung steht.

## Patentansprüche

1. Werkzeug (4) zum Montieren von Aufschiebemuttern (3), das ein am vorderen Ende offenes Magazinrohr (5) zur Aufnahme einer Reihe von Aufschiebemuttern (3), eine die Reihe von Muttern (3) zum vorderen Ende drängende Feder (11), eine Sperre (13) zum nachgiebigen Festhalten einer am vorderen Ende befindlichen Aufschiebemutter (6) und ein diese Aufschiebemutter (6) gegenüber den Aufschiebkräften abstützendes, quer zur Richtung des Magazinrohrs (5) bewegliches Widerlager (20) umfaßt.

2. Werkzeug nach Anspruch 1, **dadurch gekennzeichnet, daß** das Widerlager (20) durch Federkraft (21) außer Eingriff gedrängt ist und eine Betätigungseinrichtung (19) zum Einschieben des Widerlagers (20) zwischen die von der Sperre (13) gehaltene und die folgende Aufschiebemutter (3) vorgesehen ist.

3. Werkzeug nach Anspruch 2, **dadurch gekennzeichnet, daß** das Widerlager (20) an einem längsseits des Magazinrohrs (5) angeordneten, gemeinsam mit dem Magazinrohr (5) greifbaren Hebel (19) angeordnet ist.

4. Werkzeug nach einem der Ansprüche 1 bis 3, **dadurch gekennzeichnet, daß** das drehfeste Widerlager (20) einen gabeligen Teil zum Zusammenwirken der Schlüsselflächen (9) der Aufschiebemuttern (3) aufweist.

5. Werkzeug nach Anspruch 3, **dadurch gekennzeichnet, daß** der Hebel (19) an einem das hintere Ende des Magazinrohrs (5) schließenden Formteil (17) angelenkt ist.

6. Werkzeug nach Anspruch 5, **dadurch gekennzeichnet, daß** der Hebel (19) und der Formteil (17) einstückig aus Kunststoff bestehen und durch ein Biegescharnier (18) verbunden sind.

7. Werkzeug nach einem der Ansprüche 1 bis 6, **dadurch gekennzeichnet, daß** die Reihe der Aufschiebemuttern (3) auf einer Vorratsstange (14) sitzt, die am vorderen Ende die nachgiebige Sperre (13) trägt und deren hinteres Ende mit dem Magazinrohr (5) oder einem damit verbundenen Teil (17) eine Halterung bildet, die der Stange (14) eine Längsbewegung gestattet, die in Richtung zum vorderen Ende hin durch einen Anschlag (15, 16) begrenzt ist, der so angeordnet ist, daß sich die Sperre (13) bei der jeweils am vorderen Ende des Magazinrohrs (5) montagebereiten Aufschiebemutter (6) befindet.

8. Werkzeug nach den Ansprüchen 6 und 7, **dadurch gekennzeichnet, daß** der Formteil (17) eine Längsbohrung mit in diese hineinragenden Federzungen (16) enthält, die mit einer Verdickung (15) an der Stange (14) die Halterung und den Anschlag bilden.

9. Verwendung einer Vorratseinheit für Aufschiebemuttern (3), in der mehrere jeweils mit einer Mehrzahl von Aufschiebemuttern (3) bestückte Vorratsstangen (14) lösbar miteinander verbunden sind, im Werkzeug gemäß Anspruch 7.

## Claims

1. A tool for mounting push-on nuts (3), which comprises a magazine tube (5) open at the front end and for accommodating a row of push-on nuts (3), a spring (11) urging the row of nuts (3) towards the front end, a stop means (13) for flexibly retaining a push-on nut (6) situated at the front end and an abutment (20) which braces this push-on nut (6) against the push-on forces and which is movable transversely to the direction of the magazine tube (5).

2. A tool according to Claim 1, **characterised in that** the abutment (20) is urged out of engagement by a spring force (21) and an actuating means (19) is provided for inserting the abutment (20) between the push-on nut (3) retained by the stop means (13) and the following push-on nut (3).

3. A tool according to Claim 2, **characterised in that** the abutment (20) is provided on a lever (19) which is arranged alongside the magazine tube (5) and which can be gripped together with the magazine tube (5).

4. A tool according to any one of Claims 1 to 3, **characterised in that** the abutment (20), which is fixed in a manner precluding relative rotation, has a fork-like part to co-operate with the spanner-faces (9) of the push-on nuts (3).

5. A tool according to Claim 3, **characterised in that** the lever (19) is articulated to a moulded part (17) closing the rear end of the magazine tube (5).

6. A tool according to Claim 5, **characterised in that** the lever (19) and the moulded part (17) are made in one piece from plastics material and are joined by a bending hinge (18).

7. A tool according to any one of Claims 1 to 6, **characterised in that** the row of push-on nuts (3) is mounted on a supply rod (14) which at the front end carries the flexible stop means (13) and the rear end of which forms with the magazine tube (5) or a part (17) connected thereto a retaining means which allows the rod (14) to carry out a longitudinal movement which in the direction of the front end is limited by a stop member (15) which is arranged so that the stop means (13) is disposed on the respective push-on nut (6), which is ready to be mounted, at the front end of the magazine tube (5).

8. A tool according to Claims 6 and 7, **characterised in that** the moulded part (17) includes a longitudinal bore with spring tongues (16) projecting therein, which tongues form with a thickened portion (15) of the rod (14) the retaining means and the stop member.

9. Use of a supply unit for push-on nuts (3), in which several supply rods (14) each provided with a plurality of push-on nuts (3) are detachably connected with one another, in the tool according to Claim 7.

## Revendications

1. Dispositif de montage (4) pour écrou à emboîtement (3), qui comprend un magasin tubulaire (5) ouvert à l'extrémité avant pour loger une pluralité d'écrous à emboîtement (3), un ressort (11) poussant la pluralité d'écrous (3) vers l'extrémité avant, un arrêt (13) pour le maintien souple d'un écrou à emboîtement (6) situé à l'extrémité avant et un contre-appui (20) mobile transversalement à la direction du conduit à magasin (5) qui soutient ledit écrou à emboîtement (6) vis-à-vis des forces de poussée.

2. Dispositif selon la revendication 1, **caractérisé en ce que** le contre-appui (20) est poussé hors de son engagement par une force de ressort (21) et **en ce qu'**un dispositif de commande (19) est prévu pour engager le contre-appui (20) entre l'écrou à emboîtement (3) maintenu par l'arrêt (13) et le suivant.

3. Dispositif selon la revendication 2, **caractérisé en ce que** le contre-appui (20) est agencé contre un levier (19) disposé le long du conduit à magasin (5) pouvant être saisi conjointement au conduit à magasin (5).

4. Dispositif selon l'une quelconque des revendications 1 à 3, **caractérisé en ce que** le contre-appui (20) qui ne peut pas tourner comporte une partie en forme de fourche pour le concours des surfaces de dos (9) des écrous à emboîtement (3).

5. Dispositif selon la revendication 3, **caractérisé en ce que** le levier (19) est relié à une pièce (17) qui obture l'extrémité arrière du conduit à magasin (5).

6. Dispositif selon la revendication 5, **caractérisé en ce que** le levier (19) et la pièce (17) sont réalisés d'une seule pièce en matière plastique et sont raccordés par une charnière pliable (18).

7. Dispositif selon l'une des revendications 1 à 6, **caractérisé en ce que** la pluralité d'écrous à emboîtement (3) repose sur une barre de stockage (14) qui supporte l'arrêt flexible (13) à l'extrémité avant et dont l'extrémité arrière forme avec le conduit à magasin (5) ou une pièce reliée à celui-ci (17) un support qui permet un déplacement longitudinal de la barre (14), lequel est limité dans la direction de l'extrémité avant par une butée (15, 16) agencée de telle sorte que l'arrêt (13) se trouve toujours au niveau de l'écrou à emboîtement (6) prêt pour le montage à l'extrémité avant du conduit à magasin (5).

8. Dispositif selon les revendications 6 et 7, **caractérisé en ce que** la pièce (17) contient un alésage longitudinal avec des lames de ressort (16) qui s'engagent dans celui-ci, lesquelles forment le support et la butée avec un épaississement (15) sur la barre (14).

9. Utilisation d'une unité de stockage pour écrous à emboîtement (3), selon laquelle plusieurs barres de stockage (14) remplies chacune d'une pluralité d'écrous à emboîtement (3) sont reliées entre elles de manière détachable dans le dispositif selon la revendication 7.
